# EUROPÄISCHE PATENTSCHRIFT

(11) **EP 2 113 417 B1**
(45) Veröffentlichungstag und Bekanntmachung des Hinweises auf die Patenterteilung: **20.10.2010**
(21) Anmeldenummer: 09004007.2
(22) Anmeldetag: 20.03.2009
(51) Int. Cl.: B60P 7/08

(54) **Zurrmittel zur Ladegutsicherung**
Cargo tightener
Tendeur pour chargement

(30) Priorität: 03.05.2008 DE 202008006098 U
(43) Veröffentlichungstag der Anmeldung: 04.11.2009
(73) Patentinhaber: Westdeutscher Drahtseil-Verkauf Dolezych GmbH & Co., 44147 Dortmund (DE)
(72) Erfinder: Schöbel, Uwe, 58730 Fröndenberg (DE)
(74) Vertreter: Nunnenkamp, Jörg

(56) Entgegenhaltungen:
- AT-U1- 3 182
- DE-U1-202005 015 334
- DE-U1-202006 015 899
- FR-A- 2 677 592
- US-A1- 2002 067 972
- US-A1- 2003 161 699

## Beschreibung

Die Erfindung betrifft die Verwendung eines Zurrmittels zur Ladungssicherung von flexiblen sowie gegebenenfalls rutschfähigen Gütern, wobei das Zurrmittel mit zumindest einer Schlaufe ausgerüstet ist, welche das Ladegut wenigstens teilweise übergreift, und wobei die Schlaufe aus wenigstens zwei miteinander verbundenen Seilschlingen gebildet ist.

Zurrmittel sind hinlänglich aus der Praxis und auch aus der Literatur bekannt. Verwiesen wird in diesem Zusammenhang auf die US 2005/0180835 A1. Dieses Zurrmittel kommt im beschriebenen Fall zur Sicherung eines Behälters auf einer Ladefläche zum Einsatz.

Eine gattungsgemäße Verwendung ist beispielsweise durch die US 2002/0 067 972 A1 bekannt geworden. Hier wird ein Sicherungsnetz beschrieben, das beispielsweise zur Sicherung von Gepäck auf dem Dach eines Wagens oder Jeeps dient. Das Sicherungsnetz ist aus fest miteinander verbundenen Seilen aufgebaut.

Der Stand der Technik hat sich grundsätzlich bewährt, stößt jedoch dann an Grenzen, wenn ausladende und insbesondere flexible Güter gesichert werden sollen. Denn solche Güter lassen sich kaum durch Niederzurren auf der Ladefläche beispielsweise eines LKWs, eines Eisenbahnwagons etc. festlegen. Denn durch das Niederzurren wird die Reibkraft auf bzw. zwischen der Ladung oder den einzelnen Ladegütern erhöht, was jedoch bei flexiblen und rutschfähigen Gütern keine ausreichende Sicherung darstellt. Insbesondere in der Praxis stellen sich deshalb Probleme ein, die meistens dann beobachtet werden, wenn beispielsweise Baustahlmatten transportiert werden sollen. Hier können die momentan angebotenen Lösungen nicht überzeugen.

Der Erfindung liegt das technische Problem zugrunde, ein derartiges Zurrmittel so weiterzuentwickeln, dass eine einwandfreie Ladungssicherung von insbesondere flexiblen sowie ggf. rutschfähigen Gütern auf einer Ladefläche gegeben ist.

Zur Lösung dieser technischen Problemstelluhng ist Gegenstand der Erfindung die Verwendung nach Anspruch 1. Die Schlaufe ist grundsätzlich aus wenigstens zwei miteinander verbundenen Seilschlingen gebildet. Dabei sind die Seilschlingen durch die wenigstens zwei Verbindungsmittel miteinander gekoppelt. Je nach relativer Lage der Verbindungsmittel zueinander kann die Größe der Schlaufe bedarfsweise variiert werden. Denn die Verbindungsmittel sind in der Regel verschiebbar an den beiden Seilschlingen festgelegt. Dabei kann die Schlaufe vorzugsweise größtenteils rautenförmig bis elliptisch ausgebildet sein und sind die Abstandhalter im Regelfall an die beiden Schlaufenschenkel jeweils in etwa mittig angeschlossen.

Auf diese Weise wird eine speziell gestaltete Schlaufe zur Verfügung gestellt. Denn durch die erfindungsgemäß realisierten Abstandhalter zwischen Ihren beiden Schlaufenschenkeln wird erreicht, dass die Schlaufe ihre größtenteils oder nahezu rautenförmige Gestaltung beibehält, und zwar insbesondere bei der Montage. Aufgrund dieser größtenteils rautenförmigen bis elliptischen Gestaltung der Schlaufe wird erreicht, dass sich diese vorteilhaft in Verbindung mit zwei in der Regel realisierten und an die Schlaufe angeschlossenen Seilenden zur Ladungssicherung eignet.

Dazu wird das Zurrmittel meistens so an dem Ladegut angebracht, dass die Schlaufe eine obere Ecke bzw. mehrere Kanten oder doch zumindest eine Kante des Ladegutes übergreift, und zwar dergestalt, dass sich diese obere Ecke in etwa im Zentrum der Raute befindet. Bei diesem Vorgang sorgen die zwischen den beiden Schlaufenschenkeln obligatorischen Abstandhalter dafür, dass die Schlaufenschenkel bei der Anbringung an der oberen Ecke des Ladegutes gleichsam aufgefächert und beabstandet bleiben und die besagte Ecke in etwa im Zentrum der rautenförmigen bzw. elliptischen Schlaufe ihre Anordnung findet. Als Folge hiervon verlaufen die Abstandhalter in unmittelbarer Nachbarschaft zu der besagten Ecke.

Außerdem verlaufen die Seilenden, die an jedes Ende der Schlaufe angeschlossen sind, in der Regel in senkrechten Ebenen zueinander und darüber hinaus parallel zu jeweiligen Seitenflächen des Ladegutes. Im Übrigen wird ein Schrägverlauf der Seilenden im Vergleich zu der das Ladegut aufnehmenden Ladefläche beobachtet.

Infolge dieser Anordnung der Seilenden über Eck einerseits und deren Schrägverlauf im Vergleich zur Ladefläche andererseits wird eine besonders günstige Krafteinleitung zur Verfügung gestellt. Tatsächlich kann mit Hilfe des erfindungsgemäßen Zurrmittels sowohl ein Niederzurren als auch ein Direktzurren erfolgen. Wie bereits erläutert, wird beim Niederzurren die Reibkraft zwischen den einzelnen rutschfähigen Gütern erhöht und diese werden gleichsam mehr oder minder vertikal auf die Ladefläche gedrückt.

Das erfindungsgemäß und zusätzlich erreichte Direktzurren mit Hilfe des erfindungsgemäßen Zurrmittels führt nun dazu, dass das Zurrmittel als solches einerseits mit der Ladung verbunden wird und andererseits zusätzlich zu vertikalen Kräften (durch das Niederzurren) auch solche in Längsrichtung der Ladefläche und quer hierzu aufgebaut werden. Dadurch wird eine optimale Ladungssicherung des Ladegutes erreicht, weil die Ladung quer zur Ladefläche, in deren Längsrichtung und auch vertikal zur Ladefläche gesichert wird bzw. in diesen verschiedenen Kraftrichtungen Kräfte auf das Ladegut ausgeübt werden. Es findet also im Rahmen der Erfindung ein kombiniertes Direktzurren und Niederzurren statt, was bisher nicht beobachtet wurde.

In diesem Zusammenhang hat es sich bewährt, wenn die Schlaufe das Ladegut auf einer Länge von wenigstens 1/10, insbesondere wenigstens 1/5 und vorzugsweise zumindest 1/3 der Kantenlänge übergreift. Dadurch wird gewährleistet, dass das in sich inhomogene Ladegut unter Berücksichtigung einer groß dimensionierten Schlaufe eine Sicherung mit Hilfe des erfindungsgemäßen Zurrmittels erfährt. Aus Gründen der Stabilität und Langlebigkeit empfiehlt es sich ferner, wenn das beschriebene Zurrmittel insgesamt aus einem Stahlseil hergestellt wird. Dieses Stahlseil mag aus einzelnen miteinander verflochtenen Seelen aus ebenfalls Stahl hergestellt sein, was selbstverständlich nicht zwingend ist. Denn grundsätzlich könnte auch eine Ausführungsform aus beispielsweise Kunststoff realisiert werden. Ebenso sind Mischformen denkbar.

Im Ergebnis wird ein Zurrmittel zur Verfügung gestellt, welches sich vorteilhaft für die Ladungssicherung von flexiblen sowie rutschfähigen Gütern eignet. Tatsächlich kommt das Zurrmittel überwiegend zur Ladungssicherung von Matten, insbesondere Baustahlmatten, auf Ladeflächen von LKWs zum Einsatz. Da das erfindungsgemäße Zurrmittel aus Stahl bzw. Stahlseilen aufgebaut ist, müssen Beschädigungen des Zurrmittels bei der Ladungssicherung nicht befürchtet werden. Ganz im Gegenteil ermöglicht die Seilausführung, dass das Zurrmittel mit der Ladung verbunden wird, indem sich die Schlaufe, und/oder der ebenfalls als Seil ausgeführte Abstandhalter und/oder die Seilenden mit der Ladung verhaken, diese übergreifen oder sonst wie eine Verbindung hiermit eingehen. Das gilt insbesondere beim Transport von Baustahlmatten.

Dadurch, dass das Ladegut erfindungsgemäß sowohl nieder gezurrt als auch direkt verzurrt wird, können von der Ladung aufgebaute Kräfte in sämtlichen Raumrichtungen aufgenommen werden, und zwar namentlich in Längsrichtung der Ladefläche, quer hierzu und auch vertikal in Bezug auf die Ladefläche. Das stellt einen enormen Vorteil gegenüber bisherigen und in der Praxis eingesetzten Lösungen dar, die versucht haben, eine Ladungssicherung lediglich durch Niederzurren zu erreichen.

In der Regel ist das eine an die Schlaufe angeschlossene Seilende mit einem Haken ausgerüstet. Das andere Seilende wird dagegen im allgemeinen mit einer Winde oder dergleichen verbunden, um auf das Zurrmittel die erforderlichen Spannkräfte ausüben zu können. Zuvor ist das andere Seilende mit dem Haken im allgemeinen in einem Zurrpunkt auf der Ladefläche festgelegt worden. Jedenfalls wird eine in sämtlichen Raumrichtungen wirkende und einwandfreie Ladungssicherung im Rahmen der Erfindung zur Verfügung gestellt, die bisher kein Vorbild gefunden hat.

Nach vorteilhafter Ausgestaltung handelt es sich bei den Verbindungsmitteln um sogenannte Pressklemmen, die eine bewegliche Kopplung der beiden Seilschlingen und ihre Verbindung zu dem Zurrmittel ermöglichen. Auf diese Weise wird zugleich erreicht, dass sich die Seilschlingen bei entsprechender Belastung gegenläufig zusammenziehen. Dadurch erfährt die solchermaßen gesicherte Ladung eine zusätzliche Fixierung in Längs- und Querrichtung.

Das Verbindungsmittel kann als Montagehilfe ausgeführt sein und dazu dienen, dass Zurrmittel insgesamt an dem zu sichernden Ladegut festzulegen. Hierdurch wird auch die Montage des Zurrmittels im Zuge der Ladungssicherung erleichtert. Hierin sind die wesentlichen Vorteile zu sehen.

Im Folgenden wird die Erfindung anhand einer lediglich ein Ausführungsbeispiels darstellenden Zeichnung näher erläutert; es zeigen:
- Fig. 1: ein Zurrmittel, montiert an einem Ladegut aus übereinandergeleg- ten Matten, insbesondere Baustahlmatten, auf einer Ladefläche eines LKWs, wie aus dem Stand der Technik bekannt,
- Fig. 2: das Zurrmittel nach Fig. 1 in einer Aufsicht schematisch,
- Fig. 3: das erfindungsgemäß eingesetzte Zurrmittel und
- Fig. 4: das Zurrmittel nach Fig. 3, eingesetzt zur Ladungssicherung auf der Ladefläche eines LKWs.

In den Figuren ist ein Zurrmittel dargestellt, welches vorliegend und nicht einschränkend aus einem bzw. mehreren Seilstücken aufgebaut ist. Die Seile bzw. Seilstücke sind ihrerseits als Stahlseile ausgebildet, was selbstverständlich nicht zwingend der Fall sein muss. Das zu beschreibende Zurrmittel dient vorliegend zur Ladungssicherung von flexiblen sowie rutschfähigen Gütern 1. Bei diesen Gütern 1 handelt es sich um Matten, insbesondere Baustahlmatten 1, die auf einer Ladefläche 2 eines LKWs transportiert werden sollen. Selbstverständlich kann sich die Ladefläche 2 auch auf einem Eisenbahnwagon befinden.

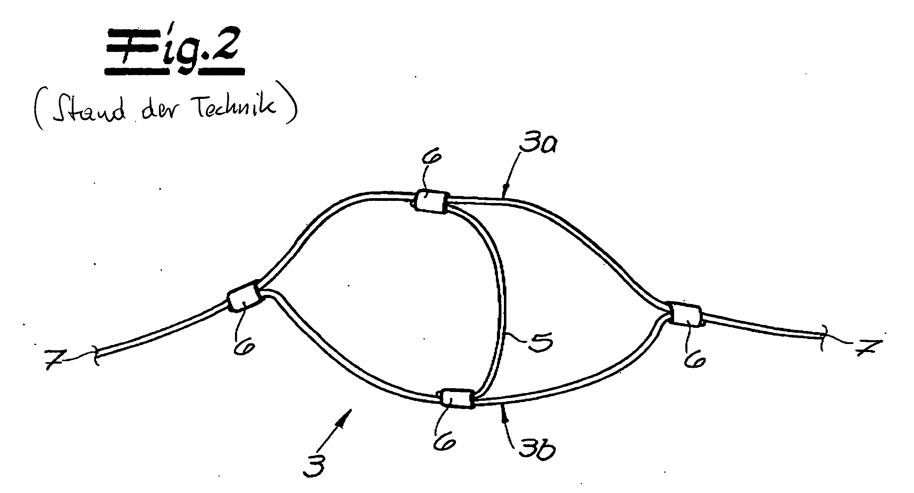

Das aus dem Stand der Technik bekannte Zurrmittel ist vorliegend mit einer Schlaufe 3 ausgerüstet, die man am Besten in der Fig. 2 erkennt. Mit Hilfe dieser Schlaufe 3 werden die Güter 1 bzw. das Ladegut zumindest teilweise übergriffen. Tatsächlich wird diese Schlaufe 3 über wenigstens eine Kante, im Ausführungsbeispiel über eine obere Ecke 4 des Ladegutes bzw. der Güter 1 gestülpt. Folglich werden insgesamt drei Kanten des Ladegutes übergriffen.

Damit bei diesem Vorgang und auch ansonsten die Schlaufe 3 ihre größtenteils rautenförmigen bis elliptische Gestalt gemäß Fig. 2 beibehält, ist lediglich ein Abstandhalter 5 vorgesehen, welcher dafür sorgt, dass zwei Schlaufenschenkel 3a, 3b der Schlaufe 3 den erforderlichen Abstand aufweisen bzw. beibehalten.

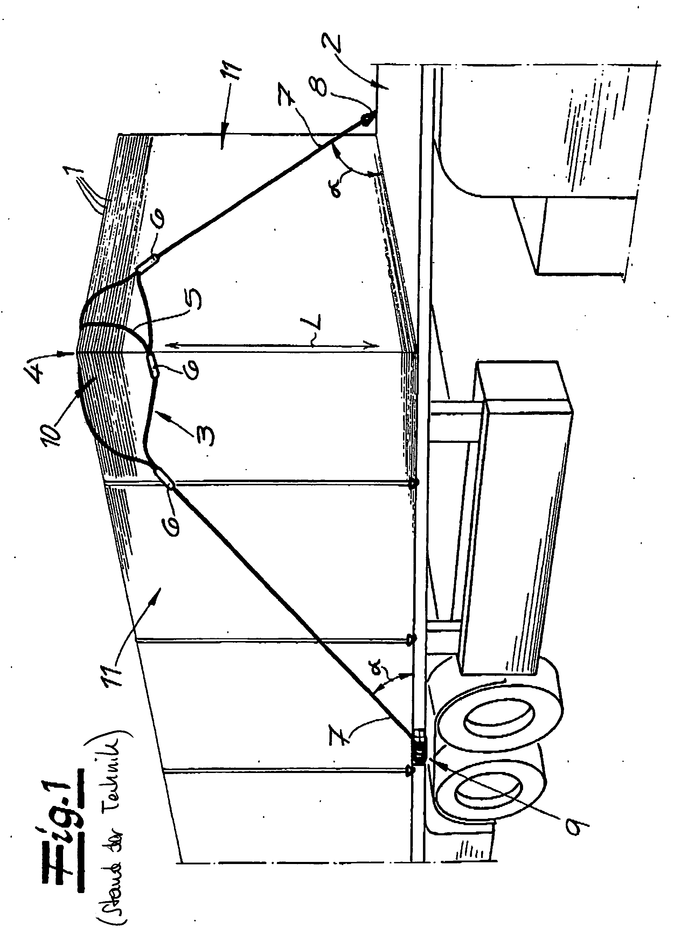

Bei dem Abstandhalter 5 handelt es sich im Rahmen des Beispiels ebenfalls um ein Seil bzw. Seilstück, welches jeweils in etwa mittig an die beiden Schlaufenschenkel 3a, 3b angeschlossen ist. Der Abstandhalter 5 und die Schlaufe 3 bzw. die Schlaufenschenkel 3a, 3b werden im Beispielfall nach den Fig. 1 und 2, die die grundsätzliche Vorgehensweise zeigen und nicht zur Erfindung gehören, durch Verpressen miteinander verbunden. Tatsächlich erkennt man insgesamt mehrere Presshülsen 6, die einerseits für die Kopplung des Abstandhalters 5 an die beiden Schlaufenschenkel 3a, 3b und andererseits für den jeweils endseitigen Anschluss von Seilenden 7 an die Schlaufe 3 sorgen.

Dabei ist das eine Seilende 7 mit einem Haken 8 ausgerüstet, während das andere Seilende 7 mit einer Winde 9 verbunden ist, um das Zurrmittel insgesamt spannen zu können. Der Haken 8 wird an oder in einem Zurrpunkt auf der Ladefläche 2 festgelegt. Die ebenfalls an der Ladefläche 2 angebrachte Winde 9 sorgt dafür, dass das hierin eingefädelte Seil bzw. Seilende 7 die erforderliche Spannung auf das Zurrmittel ausübt.

Anhand der Fig. 1 erkennt man, dass die beiden Seilenden 7 senkrecht zueinander verlaufen. Tatsächlich verfügt das eine Seilende 7 mit dem endseitigen Haken 8 über eine Anordnung in Querrichtung der Ladefläche 2, wohingegen das andere Seilende 7, welches in die Seilwinde 9 eingeschlauft ist, im Wesentlichen parallel zur Längserstreckung der Ladefläche 2 verläuft. Selbstverständlich könnte auch umgekehrt verfahren werden. So oder so verlaufen die Seilenden 7 parallel zu jeweiligen Seitenflächen 11 des Ladegutes.

Neben dieser Anordnung der Seilenden 7 in Querrichtung und in Längsrichtung der Ladefläche 2 und folglich senkrecht zueinander beobachtet man darüber hinaus, dass die beiden Seilenden 7 einen Schrägverlauf gegenüber der Ladefläche 2 aufweisen. Tatsächlich werden an dieser Stelle Winkel α im Bereich zwischen ca. 20° und 60° beobachtet.

Auf diese Weise übt das allgemein bekannte Zurrmittel sowohl niederzurrende als auch direktzurrende Kräfte auf das Ladegut bzw. die Güter 1 aus. Denn die schräge Krafteinleitung im Vergleich zur Ladefläche 2 führt zunächst einmal dazu, dass eine Kraft in Vertikalrichtung auf das Ladegut bzw. die Güter 1 in Richtung auf die Ladefläche 2 ausgeübt wird. Darüber hinaus werden Kräfte in Quer- und Längsrichtung im Vergleich zur Ladefläche 2 auf das Ladegut bzw. die Güter 1 ausgeübt. Folglich erfährt das Ladegut bzw. erfahren die flexiblen sowie rutschfähigen Güter 1 respektive Baustahlmatten eine Ladungssicherung in sämtlichen drei relevanten Raumrichtungen, was erklärt, dass das Ladegut sowohl niedergezurrt als auch direktgezurrt wird.

Denn das insgesamt als Stahlseil ausgebildete bzw. aus Stahlseilen aufgebaute Zurrmittel ist aufgrund des speziellen Charakters der Ladung auch mit dieser verbunden. Hierfür sorgt insbesondere die rautenförmige bis elliptische Gestaltung der Schlaufe 3, deren Abstand der Schlaufenschenkel 3a, 3b infolge des vorgesehenen Abstandhalters 5 dauerhaft beibehalten wird. Dadurch kann erreicht werden, dass die Ecke 4 des Ladegutes bzw. der Güter 1 eine Position in etwa im Zentrum der Raute bzw. Ellipse der Schlaufe 3 erfährt. Als Folge hiervon resultiert eine besonders gleichmäßige Krafteinleitung in den drei Raumrichtungen wie geschildert. Außerdem verläuft der Abstandhalter 5 in unmittelbarer Nachbarschaft zu der besagten Ecke 4.

Im Übrigen ist die Auslegung so getroffen, dass die Schlaufe 3 das Ladegut bzw. die zu sichernden Güter 1 auf einer Länge von wenigstens 1/10, insbesondere wenigstens 1/5 der Kantenlänge L übergreift. Das erkennt man anhand der Fig. 1. Hierdurch ist sichergestellt, dass die von der Schlaufe 3 gleichsam überdeckte oder umschlossene Eckfläche 10 des Ladegutes bzw. der Güter 1 möglichst groß bemessen ist, so dass das Ladegut bzw. die Güter 1 großflächig mit Hilfe der Schlaufe 3 gehalten werden. In diesem Zusammenhang ist es sogar möglich, dass die Schlaufe 3 das Ladegut bis zu 1/3 der besagten Kantenlänge L übergreift.

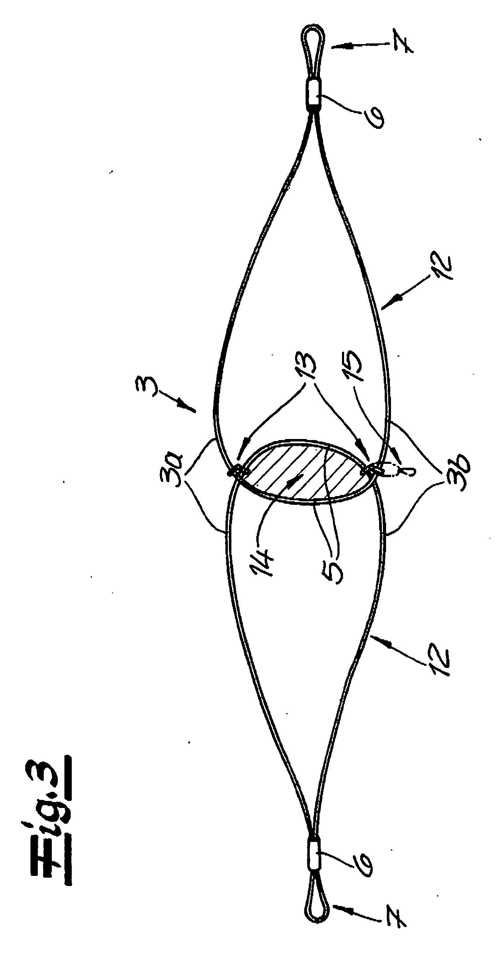

Die erfindungsgemäße Ausführungsform des Zurrmittels nach Fig. 3 zeichnet sich dadurch aus, dass hier die Schlaufe 3 bzw. deren Schlaufenschenkel 3a, 3b aus zwei miteinander verbundenen Seilschlingen 12 gebildet wird. Zur Verbindung der Seilschlingen 12 dienen im Ausführungsbeispiel zwei Verbindungsmittel 13, die vorliegend und nicht einschränkend als Pressklemmen ausgebildet sind. Die Verbindungsmittel 13 sind jeweils lös- und fixierbar an den Seilschlingen 12 festgelegt und definieren in diesem Fall zwei Abstandhalter 5. Folglich ersetzen die Verbindungsmittel 13 die Presshülsen 6 nach den Fig. 1 und 2. Sowohl die Verbindungsmittel 13 als auch die Presshülsen 6 sorgen jedoch zusammenfassend dafür, dass die beiden Schlaufenschenkel 3a, 3b den erforderlichen Abstand aufweisen bzw. beibehalten, wie er von dem einen Abstandhalter 5 oder den beiden Abstandhaltern 5 definiert wird.

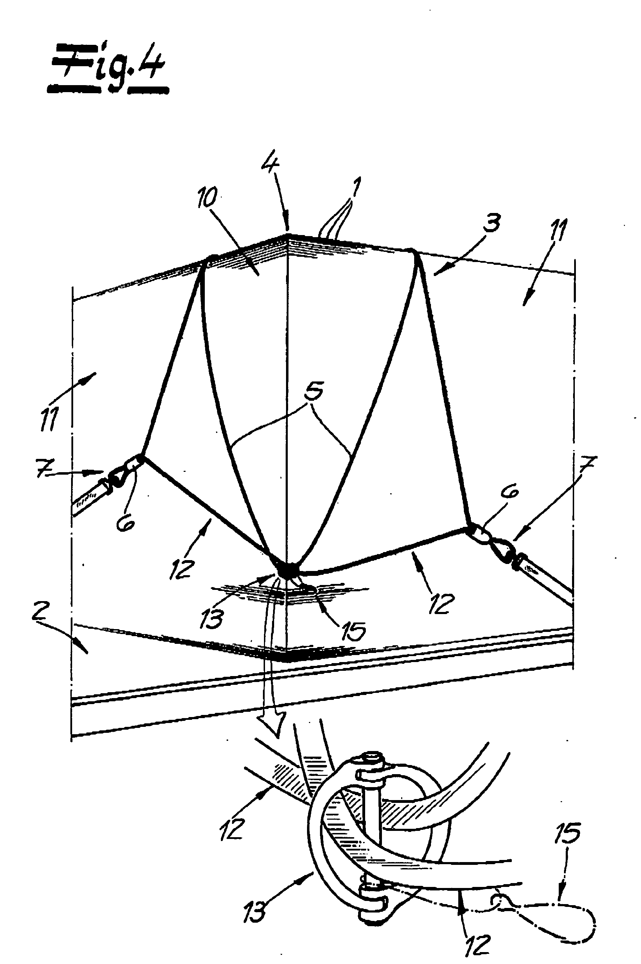

Im Rahmen der Variante nach Fig. 4 kann das Verbindungsmittel 13 als Montagehilfe ausgeführt sein. Zu diesem Zweck ist an das Verbindungsmittel 13 entsprechend der Darstellung nach Fig. 4 ein Haken oder ein anderes lösbares Koppelglied angeschlossen, welches dazu genutzt werden kann, das Verbindungsmittel 13 an dem zu fixierenden Gut 1 festzulegen. Diese Vorgehensweise empfiehlt sich besonders im Zuge der Montage des erfindungsgemäßen Zurrmittels. Dadurch wird ein Verrutschen gegenüber dem Gut 1 bzw. Ladegut verhindert.

Die beiden Abstandhalter im Rahmen des Ausführungsbeispiels nach den Fig. 3 und 4 spannen zwischen sich eine Abstandfläche 14 auf, die je nach relativer Lage der Verbindungsmittel 13 zueinander - ebenso wie die Schlaufe 3 - eine unterschiedliche Größe aufweist. Dadurch gelingt eine flexible Anpassung des Zurrmittels an das Ladegut.

Die Fig. 4 zeigt nun den Einsatz des Zurrmittels nach Fig. 3 zur Sicherung der Güter 1 bzw. des Ladegutes erneut auf der Ladefläche 2 eines LKWs. Anstelle der dargestellten Stahlmatten können genauso gut auch andere flexible und gegebenenfalls rutschfähige Güter wie Altpapierballen oder auch Betonfertigteile auf die beschriebene Art und Weise gesichert werden.

## Patentansprüche

1. Verwendung eines Zurrmittels zur Ladungssicherung von flexiblen sowie ggf. rutschfähigen Gütern (1) wobei
- das Zurrmittel mit zumindest einer Schlaufe (3) ausgerüstet ist, welche das Ladegut wenigstens teilweise übergreift, **dadurch gekennzeichnet, dass**
- die Schlaufe (3) aus wenigstens zwei miteinander verbundenen Seilschlingen (12) gebildet ist, welche durch zumindest zwei lös- und fixierbar an den Seilschlingen (12) festgelegte Verbindungsmittel (13) miteinander gekoppelt sind, wobei weiter
- je nach relativer Lage der Verbindungsmittel (13) zueinander die Größe der Schlaufe (3) bedarfsweise variiert werden kann, und wobei
- die Verbindungsmittel (13) zwei Abstandhalter (5) zwischen ihren zwei oder mehr Schlaufenschenkeln (3a, 3b) definieren, welche zwischen sich eine Abstandfläche (14) aufspannen, die ebenso wie die Schlaufe (3) je nach relativer Lage der Verbindungsmittel (13) zueinander eine unterschiedliche Größe aufweist.

2. Verwendung nach Anspruch 1, **dadurch gekennzeichnet, dass** die Schlaufe (3) größtenteils rautenförmig bis elliptisch ausgebildet ist.

3. Verwendung nach Anspruch 1 oder 2, **dadurch gekennzeichnet, dass** die Abstandhalter (5) an die beiden Schlaufenschenkel (3a, 3b) jeweils in etwa mittig angeschlossen sind.

4. Verwendung nach einem der Ansprüche 1 bis 3, **dadurch gekennzeichnet, dass** die Schlaufe (3) wenigstens eine Kante des Ladegutes übergreift.

5. Verwendung nach einem der Ansprüche 1 bis 4, **dadurch gekennzeichnet, dass** an jedes Ende der Schlaufe (3) ein Seilende (7) angeschlossen ist.

6. Verwendung nach Anspruch 5, **dadurch gekennzeichnet, dass** die Seilenden (7) bei die Kante des Ladegutes übergreifender Schlaufe (3) senkrecht zueinander und parallel zu jeweiligen Seitenflächen (11) des Ladegutes verlaufen.

7. Verwendung nach einem der Ansprüche 1 bis 6, **dadurch gekennzeichnet, dass** die Schlaufe (3) das Ladegut auf einer Länge von wenigstens 1/10, insbesondere 1/5 und vorzugsweise 1/3 der Kantenlänge (L) übergreift.

8. Verwendung nach einem der Ansprüche 1 bis 7, **dadurch gekennzeichnet, dass** es aus einem Seil hergestellt ist.

9. Verwendung nach Anspruch 8, **dadurch gekennzeichnet, dass** es sich um ein Stahlseil handelt.

10. Verwendung nach einem der Ansprüche 1 bis 9, **dadurch gekennzeichnet, dass** das Verbindungsmittel (13) als Montagehilfe ausgeführt ist.

11. Verwendung nach einem der Ansprüche 1 bis 10, **dadurch gekennzeichnet, dass** es sich bei den flexiblen sowie gegebenenfalls rutschfähigen Gütern (1) um Matten, Platten, Ballen, Fertigteile etc. handelt.

## Claims

1. A use of a lashing means for securing the load of products (1), which are flexible as well as capable of slipping, where applicable, wherein
- the lashing means is equipped with at least one loop (3), which at least partially overlaps the loaded goods, **characterized in that**
- the loop (3) is formed from at least two grommets (12), which are connected to one another and which are coupled to one another by means of at least two connecting means (13), which are arranged on the grommets (12) so as to be capable of being detached and fixed, wherein further
- the size of the loop (3) can be varied as needed, depending on the relative position of the connecting means (13) to one another, and wherein
- the connecting means (13) define two spacers (5) between their two or a plurality of loop journals (3a, 3b), which span between one another a distance space (14), which, just as the loop (3), encompasses a different size, depending on the relative position of the connecting means (13) to one another.

2. The use according to claim 1, **characterized in that** the loop (3) is for the most part embodied so as to be rhombic to elliptic.

3. The use according to claim 1 or 2, **characterized in that** the spacers (5) are connected to both of the loop journals (3a, 3b), in each case approximately in the center.

4. The use according to one of claims 1 to 3, **characterized in that** the loop (3) overlaps at least one edge of the loaded goods.

5. The use according to one of claims 1 to 4, **characterized in that** a rope end (7) is connected to each end of the loop (3).

6. The use according to claim 5, **characterized in that**, in the case of the loop (3) overlapping the edge of the loaded goods, the rope ends (7) run at right angles to one another and parallel to the respective side surfaces (11) of the loaded goods.

7. The use according to one of claims 1 to 6, **characterized in that** the loop (3) overlaps the loaded goods at a length of at least 1 /10, in particular of 1/5 and preferably of 1/3 of the edge length (L).

8. The use according to one of claims 1 to 7, **characterized in that** it is made from a rope.

9. The use according to claim 8, **characterized in that** it is a steel rope.

10. The use according to one of claims 1 to 9, **characterized in that** the connecting means (13) is embodied as assembling aid.

11. The use according to one of claims 1 to 10, **characterized in that** the goods (1), which are flexible as well as capable of slipping, where applicable, are mats, boards, bales, machined parts, etc..

## Revendications

1. Utilisation d'un moyen d'amarrage pour la sécurisation d'un chargement de produits souples (1) et susceptibles de glisser le cas échéant, dans laquelle
- le moyen d'amarrage est équipé d'au moins une boucle (3) s'engageant au moins partiellement par-dessus le produit à transporter, **caractérisé en ce que**
- la boucle (3) est constituée d'au moins deux anneaux de corde (12) reliés l'un à l'autre, qui sont accouplés l'un avec l'autre par au moins deux moyens de connexion (13) fixés aux anneaux de corde (12) de façon détachable, dans laquelle
- la taille de la boucle (3) peut en outre être modifiée selon les besoins, en fonction de la position relative des moyens de connexion (13) l'un par rapport à l'autre, et dans laquelle
- les moyens de connexion (13) définissent deux écarteurs (5) entre leurs deux ou plusieurs branches de boucle (3a, 3b), lesquelles déterminent entre elles une surface d'écartement (14) présentant une taille variable, tout comme la boucle (3), en fonction de la position relative des moyens de connexion (13) l'un par rapport à l'autre.

2. Utilisation selon la revendication 1, **caractérisée en ce que** la boucle (3) est conçue majoritairement en forme de losange, voire d'ellipse.

3. Utilisation selon la revendication 1 ou 2, **caractérisée en ce que** les écarteurs (5) sont rattachés aux deux branches de boucle (3a, 3b), à chaque fois environ au centre.

4. Utilisation selon l'une des revendications 1 à 3, **caractérisée en ce que** la boucle (3) s'engage par-dessus au moins un bord du produit à transporter.

5. Utilisation selon l'une des revendications 1 à 4, **caractérisée en ce qu'**une extrémité de corde (7) est rattachée à chacune des extrémités de la boucle (3).

6. Utilisation selon la revendication 5, **caractérisée en ce que** les extrémités de corde (7) s'étendent verticalement l'une par rapport à l'autre et parallèlement à chacune des surfaces latérales (11) du produit à transporter, avec la boucle (3) passant par-dessus le bord du produit à transporter.

7. Utilisation selon l'une des revendications 1 à 6, **caractérisée en ce que** la boucle (3) passe par-dessus le produit à transporter sur une longueur d'au moins 1 /10, en particulier 1/5 et de préférence 1/3 de la longueur de bord (L).

8. Utilisation selon l'une des revendications 1 à 7, **caractérisée en ce qu'**elle est fabriquée à partir d'une corde.

9. Utilisation selon la revendication 8, **caractérisée en ce qu'**il s'agit d'un câble d'acier.

10. Utilisation selon l'une des revendications 1 à 9, **caractérisée en ce que** le moyen de connexion (13) est conçu comme un auxiliaire de montage.

11. Utilisation selon l'une des revendications 1 à 10, **caractérisée en ce que** pour ce qui est des produits (1) susceptibles de glisser le cas échéant, il s'agit de tapis, de plaques, de balles, de pièces préfabriquées, etc.
